# EUROPEAN PATENT APPLICATION

(11) **EP 0 748 731 A1**
(43) Date of publication of application: **18.12.1996**
(21) Application number: 96304415.1
(22) Date of filing: 13.06.1996
(51) Int. Cl.: B60T 15/08, F15B 13/042

(54) **Fluid pressure responsive governor valves**

(30) Priority: 17.06.1995 GB 9512368
(71) Applicant: Knorr-Bremse Systems for Commercial Vehicles Limited, Kingswood, Bristol BS15 2NL (GB)
(72) Inventor: Durrant, Jeremy James, Longwell Green, Bristol BS15 7DR (GB)
(74) Representative: Turner, Alan Reginald

(57) **Abstract**

In a fluid pressure responsive device for switching an air compressor between on-load and off-load conditions a pressure responsive piston (9) is subject to stored reservoir pressure at an input port (4) and is movable in a housing (1) against an adjustable calibration spring (17), the piston carrying a main dual valve (27, 29, 31) which is operable to connect a delivery point (6) to a vent port (8) or the input port (1) and the piston also carries a primary dual valve (20, 23, 25) the position of which changes on movement of the piston (9) by attainment of a predetermined value of the reservoir pressure to apply pressure to a further piston (32) which operates the main valve.

## Description

This invention relates to a fluid pressure responsive governor valve mechanism and relates especially to a governor valve for controlling the operation of an air compressor of a compressed air system.

Pressure responsive governor valve mechanisms are known which comprise a cylindrical body within which a spring-biased pressure responsive piston is sealingly slideable to respond to a predetermined input pressure at an input port to operate a valve to close a connection between a delivery port and a vent port and connect the input port to the delivery port. In use the pressure at the delivery port typically controls an unloader mechanism of an air compressor in order to interrupt the supply of compressed air to a reservoir. When the reservoir pressure descends below a given value the piston moves to reset the valve and vent the delivery port. In practice such governor valves tend not to be stable in their operation at pressures around a preset value since the valve can switch one way or the other. It may of course be expected that an improved response might be achieved by electronic means but the object of the invention is to provide an improved more stable valve mechanism preferably within an existing envelope.

According to the present invention there is provided a fluid pressure responsive governor valve mechanism comprising a housing having an input port, a delivery port and a vent port and a spring-biased fluid pressure responsive member sealingly movable in said housing, said member carrying main double valve means and providing in a first state of said member a connection between the delivery port and said vent port and in a second state of said member a connection between the delivery port and said input port and characterised by a primary valve carried by said pressure responsive member and said primary valve being operable in said second state to communicate fluid pressure from said input port to operate said main double valve means to connect said input port to said delivery port.

In order that the invention may be more clearly understood and readily carried into effect the same will be further described with reference to the accompanying drawings of which:-
Fig. 1, illustrates a sectional view of a fluid pressure responsive governor valve mechanism employing the invention and
Fig. 2, illustrates the operation in a graphical manner.

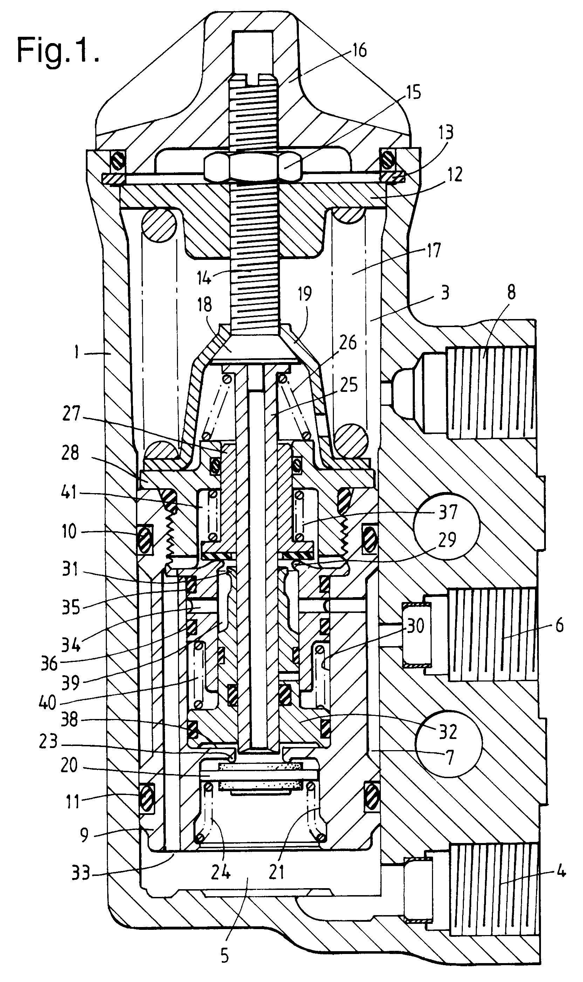

Referring to Fig. 1, the mechanism has a housing comprising a cylindrical bore 2 and an atmospheric chamber 3. An input port 4 communicates with a region 5 at the lower closed end of the cylindrical bore 2, a delivery port 6 communicates with an intermediate annular region 7 of the bore 2 and an exhaust port 8 communicates with the atmospheric chamber 3. Sealingly slideable within the bore 2 there is provided a piston 9 carrying upper and lower annular seals 10 and 11 the space between which defines the extremities of the region 7. The upper open end of the housing is fitted with an axially located insert 12 retained by an internal circlip 13. The insert 12 carries an axially extending adjustment screw 14 having a lock nut 15 enclosed by a push-on rubber dust cover 16. The lower end of the adjustment screw 14 carries a head 18 which cooperates with a shaped member 19 so slideable on 14 to contain a calibration spring 17 the force of 17 being adjustable from externally by 14. The member 19 is abutted by an end-piece 28 which is screwed into the upper end of piston 9 the abutment thereby being under the influence of pressure in input chamber 5.

The piston 9 contains an assembly of a primary valve and a main valve. The primary valve comprises a disc valve member 20 located in a recess 21 at the lower end of the piston and urged against an annular inlet seat 23 by a light spring 24. An axially slideable vent tube 25 extends through the piston and is urged by a light spring 26 against the head 18 of the adjustment screw 14 such that its lower end normally stands clear of the valve member 20 until engagement is effected by upward movement of the piston 9 against the calibration spring 17. The main valve comprises an air pressure responsive dual valve having an annular valve member 27 axially movably retained by the upper end piece 28 of the piston and urged against its seat 29 by a spring 37 (which is somewhat stronger than 26) captive in an annular region 41. End piece 28 also locates a concentric inlet valve seat member 29 with seals 35 and 36 in an internal bore 30 of the piston and the valve member 27 is engageable by the upper end valve seat 31 of a pressure responsive member 32 sealingly slideable in the bore 30 and also on tube 25 concentric therewith. The member 32 is urged downward by a suitably chosen bias spring 40. The bore of the member 27 is a vent passage. The periphery of the valve member 27 is in continuous communication via a passage 33 with the region 5 and the region 39 surrounding the end seat 31 of the valve member 32 is in communication with the delivery port 6 via a passage 34 between the two annular seals 35 and 36 carried by the stationary seat member 29.

In operation of the valve mechanism the input port 4 is connected to receive input pressure from an air storage reservoir (not shown) of a compressed air system and the delivery port 6 is connected to an unloader device of an air compressor which charges the reservoir. The purpose of the valve mechanism is therefore to operate the unloader device to interrupt charging of the reservoir by the compressor when the stored reservoir pressure attains a predetermined value. This value is determined by the compression force of the spring 17 as set by the adjustment screw 14.

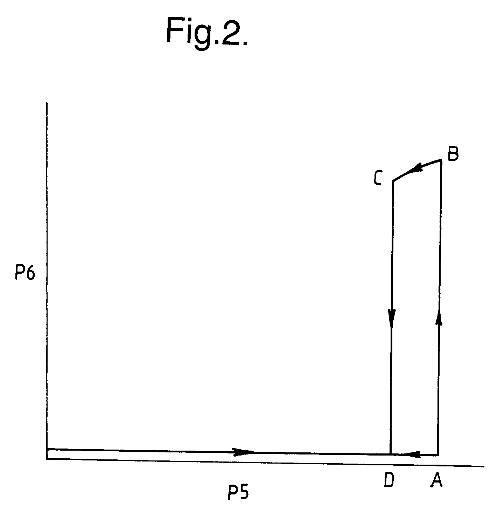

With reference also to Fig. 2, the piston 9 is therefore subjected to reservoir pressure P4 in the region 5 and at the delivered pressure P6 at the delivery port initially sending at atmospheric pressure.

At a predetermined pressure value A, of P5 the piston 9 begins to move upwards against top hat member 19 and the force of spring 17 until the vent tube 25 is engaged by the disc valve member 20. Such engagement seals the region 38 from the atmospheric vent port 8 and slight further upward movement of piston 9 causes the disc valve member 20 to be unseated from seat 23 to connect the region 38 to the input chamber 5. The elevated pressure P5 now acting upon piston member 32 drives it upwards against the light return spring 40 and the seat 31 thereof engages the main valve member 27. Since the combined force of spring 40 and the pressure on the effective annular area of member 27 is small compared to the upward force acting on the piston member 32, the valve member 27 is lifted rapidly from its seat and as represented by point B in Fig. 2 thereby opens a flow path for compressed air from input chamber 5 via annular region 41 and passage 34 to the delivery port 6 and the unloader device (not shown) is operated. The compressor is thereby unloaded. Such delivered pressure at port 6 now continues to act on the effective annular area of valve member 27 which surrounds the vent seat 31 of and piston 32 and the condition is therefore stable until the input reservoir pressure P5 in region 5 falls to a lower value as represented by point C in Fig. 2 to cause piston 9 to descend sufficiently to uncover the lower end of tube 25 to vent the region 38 to chamber 3 via tube 25. Piston 32 then rapidly descends relative to 27 and the double valve member 27 closes the connection from 37 and vents the delivery port 6 to release the unloader device at point D of Fig. 2. The air compressor is then able to recharge the reservoir towards the valve of P5 represented by point A The difference of pressures represented by points A and D is suitably determined by the geometry of the piston 32 and main valve 27 and the inherent hysteresis.

## Claims

1. A fluid pressure responsive governor valve mechanism comprising a housing (1) having an input port (4), a delivery port (6) and a vent port (8) and a spring-biased fluid pressure responsive member (9) sealingly movable in said housing (1), said member carrying main double valve means (27) and providing in a first state of said member a connection between the delivery port (6) and said vent port (8) and in a second state of said member a connection between the delivery port (6) and said input port (4) and characterised by a primary valve (20, 23) carried by said pressure responsive member (9) and said primary valve (20, 23) being operable in said second state to communicate fluid pressure for said input port (4) to operate said main double valve means (27, 29) to connect said input port (4) to said delivery port (6).

2. A pressure responsive governor valve mechanism as claimed in claim 1, characterised in that said primary valve comprises a double valve member (20) resiliently urged towards a seat (23) within the pressure responsive member (9) and a concentric vent tube (25) supported by the housing and passing through the pressure responsive member (9) to be engageable by said double valve member (20).

3. A pressure responsive governor valve mechanism as claimed in claim 2, characterised in that said main valve comprises a main double valve member (27) resiliently urged towards a further valve seat (29) in the pressure responsive member (9) and a pressure responsive vent valve seat member (31) engageable with said further valve member in a sense to unseat it from the respective further valve seat (29).

4. A pressure responsive governor valve mechanism as claimed in claim 3 characterised in that said main double valve member (27) and said pressure responsive vent valve seat member (29) are concentric with said vent tube (25).

5. A pressure responsive governor valve mechanism as claimed in claim 1, 2, 3 or 4 characterised in that said pressure responsive member (9) comprises a piston having two seals (10, 11) sealingly moveable in a bore (2) of the housing 1 and said delivery port communicates with said main valve via a region (7) between said two seals.

6. A pressure responsive governor valve mechanism as claimed in any preceding claim characterised in that said pressure responsive member (9) is engageable with an adjustable compressed captive spring arrangement (14, 17, 19).
